# EUROPÄISCHE PATENTSCHRIFT

(11) **EP 0 953 769 B1**
(45) Veröffentlichungstag und Bekanntmachung des Hinweises auf die Patenterteilung: **07.01.2004**
(21) Anmeldenummer: 99107863.5
(22) Anmeldetag: 21.04.1999
(51) Int. Cl.: F04C 15/00, F04C 2/107, F16D 1/09

(54) **Exzenterschneckenpumpe**
Eccentric screw pump
Pompe à vis excentrique

(30) Priorität: 27.04.1998 DE 19818676; 04.06.1998 DE 19824848
(43) Veröffentlichungstag der Anmeldung: 03.11.1999
(73) Patentinhaber: Allweiler AG, D-78315 Radolfzell (DE)
(72) Erfinder: Wehling, Werner, 46286 Dorsten (DE); Paul, Alfred, 46514 Scherrnbeck (DE)
(74) Vertreter: Hiebsch, Gerhard F., Dipl.-Ing.

(56) Entgegenhaltungen:
- DE-A- 2 601 138
- DE-A- 3 818 508
- DE-A- 4 121 717
- DE-C- 3 804 673

## Beschreibung

Die Erfindung betrifft eine Exzenterschneckenpumpe mit einer Pumpenwelle, die einends als -- nahe einem Gelenkkopf od.dgl. Anschlussteil gelagerte und mit diesem verbundene - - Hohlwelle ausgebildet sowie auf die Abtriebswelle eines Pumpenantriebs aufgesteckt und mit dieser verbunden ist.

Eine derartige Exzenterschneckenpumpe offenbart die DE 41 21 717 A1 der Anmelderin. Deren endwärts hohle Pumpensteckwelle ist auf die Abtriebswelle aufgeschoben und mit ihr durch einen die Wellenachse querenden Kerbstift formschlüssig verbunden. Die direkte Verbindung der Abtriebswelle des Pumpenantriebes mit der aufgesteckten Antriebswelle der Pumpe kann auch durch Passfederverbindungen erfolgen.

Aus Montage- und Demontagegründen sind diese Verbindungen mit Spiel ausgeführt und durch zusätzliche Dichtelemente gegen Korrosion geschützt. Trotz dieser Abdichtung und des Einsatzes von Antikorrosionsmitteln zwischen den Bauteilen sind Korrosion, vor allem Passungs- oder Tribokorrosion, nicht auszuschließen.

Außerdem erfordern diese Verbindungen aufgrund ihrer konstruktiven Ausführung infolge auftretender Kerbwirkungen große Pumpenwellenaußendurchmesser mit der Folge, daß sie besondere größerbauende Wellendichtungsbauteile -- im Verhältnis zu einer Pumpe ohne Steckwellenverbindung -- erforderlich werden lassen und dadurch eine erhöhte Anfälligkeit dieser Bauteile ausgelöst wird.

Ein Spannsatz zum Festlegen einer büchsenartigen -- eine zylindrische Außenumfangsfläche aufweisenden -- Nabe auf einer Welle mit einem dünnwandigen Konusring, der zum Anbringen auf der Außenumfangsfläche der Nabe bestimmt ist und eine zylindrische Öffnung der Außenumfangsöffnung gleichen Durchmessers sowie eine konische, der Zylinderachse gleichachsige Außenumfangsfläche aufweist, sowie mit einem Spannring, dessen Öffnung eine entsprechend konische Innenumfangsfläche bildet, ist aus der DE 26 01 138 A1 bekannt. Die Innenumfangsfläche ist zum axialen Aufpressen auf die konische Außenumfangsfläche des Konusrings bestimmt, und der Spannring ist in einen radial äußeren Ring und einen inneren Ring unterteilt.

In Kenntnis dieses Standes der Technik hat sich der Erfinder das Ziel gesetzt, unter Beibehaltung leichter Montier- bzw. Demontierbarkeit das erwähnte Wellenspiel, Korrosion und/oder Tribokorrosion ebenso zu vermeiden wie große Pumpenwellenaußendurchmesser sowie größere Wellendichtungsbauteile.

Zur Lösung dieser Aufgabe führt die Lehre nach dem unabhängigen Patentanspruch; die Unteransprüche geben günstige Weiterbildungen an.

Erfindungsgemäß wird die Abtriebswelle mit der sie im Kupplungsbereich umfangenden Pumpenwelle durch eine von außen auf die Abtriebswelle des Antriebes aufgebrachte, Radialkräfte erzeugende Spanneinrichtung gespannt, welche das als kerbfreie Hohlwelle ausgebildete antriebsseitige Ende der Pumpenwelle in Abstand zum Gelenkkopf umfängt, durch Kraftschluß verbunden; die Pumpenwelle ist zumindest teilweise als dünnwandige Hohlwelle ohne kerbende Querbohrung oder Passfedernut ausgeführt. Die an einem ersten Lagerabschnitt angeordnete Spanneinrichtung weist einen die Pumpenwelle umfangenden Spannring mit antriebswärts zur Wellenlängsachse in einem Winkel geneigter Außenfläche für einen Außenring mit entsprechend geneigter Innenfläche sowie achsparallele Zugelemente auf, mit denen Spannring und Außenring aneinander in axialer Richtung verschieblich sind; der Außenring wird zum Gelenkkopf hin in seine Spannstellung gezogen. Desweiteren ist zwischen der Spanneinrichtung bzw. dem ersten Lagerabschnitt für das Kupplungsende der Abtriebswelle in der Pumpenwelle sowie dem Gelenkkopf ein zweiter Lagerabschnitt angeordnet. Bei dieser Anordnung erfolgen Drehmoment- und Axialkraftübertragung reibschlüssig.

Dank dieser Maßgaben ist die Steckwellenverbindung radial und axial spielfrei, und lässt keine Relativbewegungen zu. Zudem ist diese spielfreie kraftschlüssige Verbindung druckdicht. Korrosion und/oder Passungskorrosion werden zuverlässig unterbunden.

Als weiterer Vorteil ist anzusehen, daß die kerbfreie Ausführung hohe Belastungen und somit kleine Wellendurchmesser zuläßt. Dadurch ist der Pumpenwellenaußendurchmesser mit denen vorhandener Pumpen mit durchgehender gelagerter Pumpenwelle und Antrieb über Kupplung identisch; besondere größere Wellendichtungsbauteile sind nicht erforderlich. Beim Lösen der Spannverbindung federt die Hohlwelle auf, was eine leichte Demontierbarkeit gewährleistet.

Vorteilhafterweise liegt das Verhältnis der Wanddicke der Zylinderwandung des hohlen Wellenendes zum Wellendurchmesser zwischen 1 : 7 bis 1 : 15, bevorzugt bei etwa 1 : 10.

Erfindungsgemäß umfängt die Spanneinrichtung das antriebsseitige Ende der als Hohlwelle ausgebildeten Pumpenwelle nahe der Endkante der Zylinderwandung im Bereich eines ersten Lagerabschnittes eines Kupplungsendes der Abtriebswelle.

Der Spannring ist erfindungsgemäß querschnittlich L-förmig gestaltet und bietet einen innenseitig der Pumpenwelle anliegenden und anderseits die geneigte Außenfläche aufweisenden Druckschenkel an sowie einen Radialkragen, wobei letzteren Spannschrauben als Zugelemente durchsetzen, die in den Außenring eingreifen. Dieser kann durch die Spannschrauben zum Gelenkkopf hin gezogen werden, wodurch der radiale Druck auf den vom hohlen Ende der Pumpenwelle umfangenen Lagerabschnitt zunimmt.

Biegemomenten -- insbesondere erhöhten Biegemomenten bei Gelenkverschleiß und somit erhöhten Belastungen der Hohlwelle und der Spannverbindung -- wird im Rahmen der Erfindung durch die Anordnung einer zweiten Lagerstelle zwischen Gelenkangriffspunkt und Spannstelle bzw. erstem Lagerabschnitt entgegengewirkt.

Zur Verhinderung von Tribokorrosion wird im Bereich zwischen den beiden Lagerstellen oder -abschnitten vorteilhafterweise ein -- ringförmiger -- Spalt angeordnet, der innenseitig von einem Zwischenabschnitt des Kupplungsendes sowie nach außen hin von der Wandung des hohlen Endes der Pumpenwelle begrenzt ist.

Weitere Vorteile und Einzelheiten der Erfindung ergeben sich aus der nachfolgenden Beschreibung eines bevorzugten Ausführungsbeispiels sowie anhand der Zeichnung; diese zeigt in:

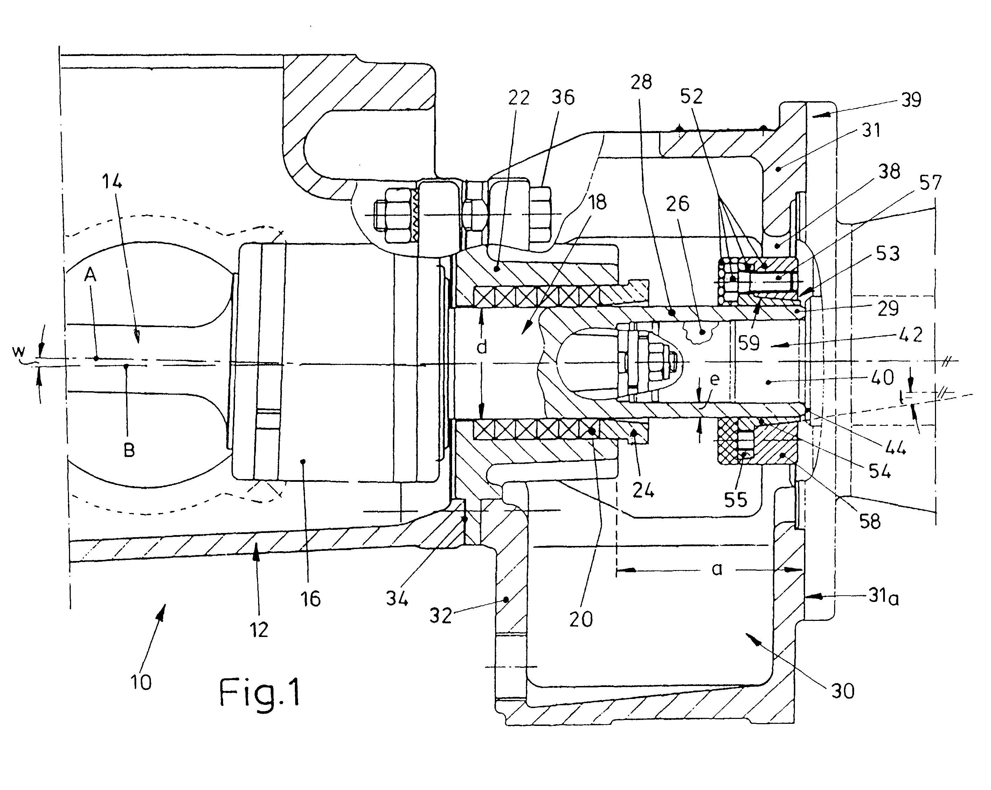

- Fig. 1:: einen Teillängsschnitt durch eine Exzenterschneckenpumpe;
- Fig. 2:: ein vergrößertes Detail aus Fig. 1;
- Fig. 3:: einen vergrößerten Ausschnitt aus Fig. 2.

Eine Exzenterschneckenpumpe 10 weist in einem Wellengehäuse 12 eine Gelenkwelle 14 mit einem Gelenkkopf 16 auf, deren - - nicht dargestelltes -- anderes Ende an einen Rotor spindelartiger Gestalt angelenkt ist. Von diesem Gelenkkopf 16 geht eine Pumpensteckwelle 18 des Durchmessers d aus, die nahe dem Gelenkkopf 16 von Packringen 20, einem Stopfbuchsengehäuse 22 sowie einer Stopfbuchsenbrille 24 umgeben ist.

Die Längsachse A der Gelenkwelle 14 verläuft -- im Hinblick auf die zur Längsachse des spindelartigen Rotors exzentrische Lage des Anlenkpunktes -- in einem Winkel w zur Längsachse B der Pumpensteckwelle 18, deren antriebsseitiges Wellenende als Hohlwelle mit -- einen Welleninnenraum 26 der Länge a begrenzender -- verhältnismäßig dünner Zylinderwandung 28 ausgebildet ist; der Wellendurchmesser d entspricht etwa dem 7-fachen bis 15-fachen Maß der Wanddicke e.

Die Pumpensteckwelle 18 ist von einem topfartigen Gehäuse 30, einem sog. Laternensockel, umgeben, das/der mit einer Stirnwandung 32 unter Zwischenschaltung einer Dichtung 34 bei 36 mit dem Wellengehäuse 12 verschraubt ist.

Die Endkante 29 jener Zylinderwandung 28 durchgreift einen zentrischen Durchbruch 38 einer Deckelwand 31 des Gehäuses 30 und fluchtet etwa mit deren Außenfläche 31ₐ. Bei 39 ist eine -- von der Abtriebswelle 42 durchgriffene Anschlußplatte eines ansonsten in der Zeichnung vernachlässigten Antriebsgehäuses angedeutet.

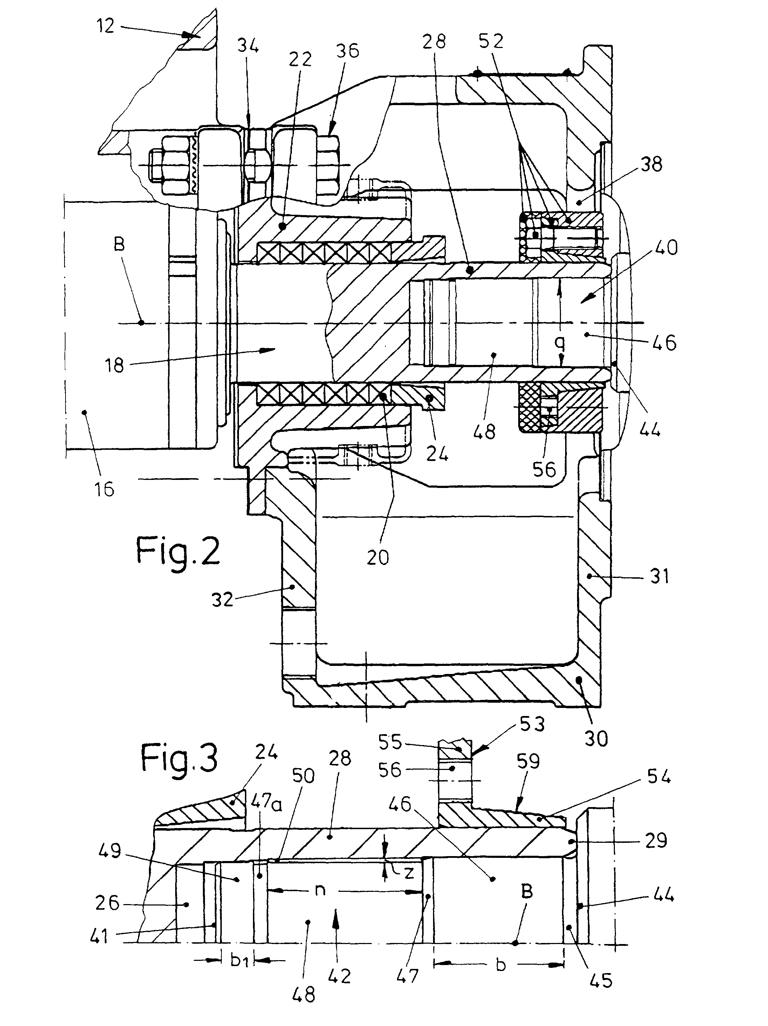

In den Welleninnenraum 26 ist das Kupplungsende 40 einer Abtriebswelle 42 eines nicht dargestellten Pumpenantriebs so eingeschoben, dass eine äußere Ringschulter 44 der Abtriebswelle 42 an der Endkante 29 der Pumpensteckwelle 18 anschlägt. An diese Ringschulter 44 schließt -- nach einer in Fig. 3 erkennbaren Ringnut 45 -- ein erster Lagerabschnitt 46 der Abtriebswelle 42 an, dessen axiale Länge mit b, dessen Durchmesser mit q bezeichnet ist und der an einer inneren Ringschulter 47 endet. Der inneren Ringschulter 47 folgt zur Stirn 41 des Kupplungsendes 40 bzw. der Abtriebswelle 42 hin ein Zwischenabschnitt 48 der axialen Länge n, dem -- nach einer weiteren Ringschulter 47ₐ -- ein zweiter Lagerabschnitt 49 der Länge b₁ nachgeordnet ist. Der Zwischenabschnitt 48 begrenzt mit der ihn in radialem Abstand z umfangenden Zylinderwandung 28 einen -- in Fig. 3 überhöht dargestellten -- Spalt 50 der axialen Länge n.

Im übrigen ist die Zylinderwand 28 den radialen Stufungen des Kupplungsendes 40 angepaßt und liegt diesem im Bereich der beiden Lagerabschnitte 46, 49 unmittelbar an.

Das als Vollprofil ausgebildete Kupplungsende 40 ist mit dem hohlen Wellende der Pumpensteckwelle 18 kraftschlüssig verbunden; nahe der Endkante 29 trägt die Zylinderwandung 28 eine Spanneinrichtung 52 mit einem Spannring 53 L-förmigen Querschnitts; von einem sich zur Endkante 29 der Pumpensteckwelle 18 querschnittlich verjüngenden Druckschenkel 54 des Spannrings 53 ragt ein Radialkragen 55 ab, der mit Bohrungen 56 ausgestattet ist. Diese durchsetzen Spannschrauben 57 und ziehen einen Außenring 58 mit einer zur Längsachse B in einem Winkel t von etwa 7° geneigten Innenfläche an, welche an der gleichermaßen geneigten Außenfläche 59 des Druckschenkels 54 gleitet. Dabei wird die Zylinderwandung 28 zunehmend -- mit Kraftschluss -- gegen das Kupplungsende 40 der Abtriebswelle 42 gedrückt.

Das System aus Pumpensteckwelle 18 und eingeschobenem Kupplungsende 40 bietet also zwischen dem Gelenkkopf 16 und dem Bereich der Spanneinrichtung 52 bzw. dem ersten Lagerabschnitt 46 einen zweiten Lagerabschnitt 49 kürzerer axialer Länge b₁ an sowie -- zur Verhinderung von Tribokorrosion -- zwischen den beiden Lagerabschnitten 46, 49 jenen Spalt 50 an. Das Verhältnis der Längen b₁ zu b beträgt hier etwa 1 : 4. Die Länge n des Spaltes 50 ist etwas größer bemessen als die Länge b des ersten Lagerabschnitts 46.

## Patentansprüche

1. Exzenterschneckenpumpe mit einer Pumpenwelle (18), die einends als nahe einem Gelenkkopf od.dgl. Anschlussteil (16) gelagerte und mit diesem verbundene Hohlwelle ausgebildet, auf die Abtriebswelle (42) eines Pumpenantriebs aufgeschoben und mit dieser verbunden ist,
**dadurch gekennzeichnet,**
**dass** Pumpenwelle (18) und Abtriebswelle (42) durch eine Radialkräfte erzeugende Spanneinrichtung (52), welche das als kerbfreie Hohlwelle ausgebildete antriebsseitige Ende der Pumpenwelle (18) in Abstand zum Gelenkkopf (16) umfängt, kraftschlüssig verbunden sind, dass die an einem ersten Lagerabschnitt (46) angeordnete Spanneinrichtung (52) einen die Pumpenwelle (18) umfangenden Spannring (53) mit antriebswärts zur Wellenlängsachse (B) in einem Winkel (t) geneigter Außenfläche (59) für einen Außenring (58) mit entsprechend geneigter Innenfläche sowie achsparallele Zugelemente (57) aufweist, mit denen Spannring und Außenring aneinander in axialer Richtung verschieblich sind, wobei zwischen der Spanneinrichtung (52) bzw. dem ersten Lagerabschnitt (46) für das Kupplungsende (40) der Abtriebswelle (42) in der Pumpenwelle (18) sowie dem Gelenkkopf (16) ein zweiter Lagerabschnitt (49) angeordnet ist.

2. Exzenterschneckenpumpe nach Anspruch 1, **dadurch gekennzeichnet, dass** zwischen den beiden Lagerabschnitten (46, 49) ein Spalt (50) verläuft, der ringförmig sowie von einem Zwischenabschnitt (48) des Kupplungsendes (40) der Abtriebswelle (42) einerseits und dem gegenüberliegenden Abschnitt der Wandung (28) des hohlen Wellenendes der Pumpenwelle (18) anderseits begrenzt ist.

3. Exzenterschneckenpumpe nach Anspruch 1 oder 2, **dadurch gekennzeichnet, dass** die Spanneinrichtung (52) nahe der Endkante (29) der Zylinderwandung (28) angeordnet ist.

4. Exzenterschneckenpumpe nach Anspruch 2, **dadurch gekennzeichnet, dass** die axiale Länge (b) des ersten Lagerabschnitts (46) etwa der axialen Länge (n) des Spaltes (50) entspricht, bevorzugt etwas kürzer ist.

5. Exzenterschneckenpumpe nach Anspruch 1 oder 4, **dadurch gekennzeichnet, dass** der zweite Lagerabschnitt (49) kürzer als der erste Lagerabschnitt (46) und das Verhältnis von deren Längen (b₁ : b) bevorzugt etwa 1 : 4 ist.

6. Exzenterschneckenpumpe nach einem der Ansprüche 1 bis 5, **gekennzeichnet durch** ein Verhältnis der Wanddicke (e) der Wandung (28) des hohlen Wellenendes zum Wellendurchmesser (d) der Pumpenwelle (18) von 1 : 7 bis 1 : 15, bevorzugt etwa 1 : 10.

7. Exzenterschneckenpumpe nach einem der Ansprüche 1 bis 6, **dadurch gekennzeichnet, dass** der Spannring (53) der Spanneinrichtung (52) mit einem der Pumpenwelle (18) anliegenden und anderseits die geneigte Außenfläche aufweisenden Druckschenkel (54) sowie einem Radialkragen (55) querschnittlich L-förmig gestaltet ist, wobei den Radialkragen (55) Spannschrauben (57) als Zugelemente durchsetzen, die in den Außenring (58) eingreifen.

8. Exzenterschneckenpumpe nach Anspruch 1 oder 3, **dadurch gekennzeichnet, dass** der Außenring (58) in Richtung auf den Gelenkkopf (16) in seine Spannstellung überführbar ist.

9. Exzenterschneckenpumpe nach Anspruch 1 oder 7, **gekennzeichnet durch** einen Winkel (t) von 5° bis 10°, bevorzugt etwa 7°.

## Claims

1. Eccentric screw pump having a pump shaft (18), which is constructed at one end as a hollow shaft mounted in the vicinity of a joint head or like connecting part (16) and connected thereto, pushed onto the driven shaft (42) of a pump drive and connected thereto,
**characterised in that**
the pump shaft (18) and the driven shaft (42) are joined in friction-fitting manner by a clamping device (52) generating radial forces which envelops the drive-side end of the pump shaft (18) constructed as a notch-free hollow shaft at a distance from the joint head (16) and that the clamping device (52) arranged on a first bearing section (46) possesses a clamping ring (53) enveloping the pump shaft (18) with towards the drive an outer surface (59) inclined to the longitudinal axis (B) of the shaft at an angle (t) for an outer ring (58) having a correspondingly inclined inner surface and axially parallel pulling elements (57) by means of which the clamping ring and outer ring are displaceable on one another in the axial direction, wherein between the clamping device (52) or the first bearing section (46) for the coupling end (40) of the driven shaft (42) in the pump shaft (18) and the joint head (16) a second bearing section (49) is arranged.

2. Eccentric screw pump according to Claim 1, **characterised in that** between the two bearing sections (46, 49) runs a gap (50) which is annular and bounded by an intermediate section (48) of the coupling end (40) of the driven shaft (42), on the one hand, and the opposite section of the wall (28) of the hollow shaft end of the pump shaft (18), on the other hand.

3. Eccentric screw pump according to Claim 1 or 2, **characterised in that** the clamping device (52) is arranged in the vicinity of the end edge (29) of the cylinder wall (28).

4. Eccentric screw pump according to Claim 2, **characterised in that** the axial length (b) of the first bearing section (46) corresponds approximately to the axial length (n) of the gap (50) and is preferably a little shorter.

5. Eccentric screw pump according to Claim 1 or 4, **characterised in that** the second bearing section (49) is shorter than the first bearing section (46) and the ratio of their lengths (b₁ : b) is preferably approximately 1 : 4.

6. Eccentric screw pump according to any of Claims 1 to 5, **characterised by** a ratio of the wall thickness (e) of the wall (28) of the hollow end of the shaft to the diameter (d) of the shaft of the pump shaft (18) of from 1 : 7 to 1 : 15, preferably approximately 1 : 10.

7. Eccentric screw pump according to any of Claims 1 to 6, **characterised in that** the clamping ring (53) of the clamping device (52) is designed with a L-shaped cross-section with a pressure limb (54) fitting against the pump shaft (18) and on the other side having the inclined outer surface and with a radial collar (55), wherein clamping screws (57) as pulling elements pass through the radial collar (55) and engage in the outer ring (58).

8. Eccentric screw pump according to Claim 1 or 3,
**characterised in that** the outer ring (58) is transferable into its clamping position in the direction of the joint head (16) .

9. Eccentric screw pump according to Claim 1 or 7,
**characterised by** an angle (t) of 5° to 10°, preferably approximately 7°.

## Revendications

1. Pompe à vis excentrique avec un arbre de pompe (18), qui est configuré à une extrémité sous la forme d'un arbre creux disposé à proximité d'une tête articulée ou d'un élément de raccordement similaire (16), qui est poussé sur l'arbre récepteur (42) d'un entraînement de pompe et relié à celui-ci, **caractérisée en ce que**
l'arbre de pompe (18) et l'arbre récepteur (42) sont reliés par friction par l'intermédiaire d'un dispositif tendeur (52) générant des forces radiales, lequel dispositif tendeur entoure l'extrémité de l'arbre de la pompe (18) du côté entraînement, configurée sous la forme d'un arbre creux exempt d'encoches, à une certaine distance de la tête articulée (16), **en ce que** le dispositif tendeur (52) disposé au niveau d'une première section de palier (46) présente un anneau tendeur (53) entourant l'arbre de la pompe (18), avec une surface extérieure (59) inclinée vers l'entraînement selon un angle (t) par rapport à l'axe longitudinal de l'arbre (B) pour un anneau extérieur (58), avec une surface intérieure inclinée de manière correspondante ainsi que des éléments de traction parallèles à l'axe (57), avec lesquels l'anneau tendeur et l'anneau extérieur peuvent être déplacés l'un vers l'autre dans la direction axiale, moyennant quoi, entre le dispositif tendeur (52) ou la première section de palier (46) pour l'extrémité de couplage (40) de l'arbre récepteur (42), il est prévu dans l'arbre de la pompe (18) ainsi que dans la tête articulée (16) une deuxième section de palier (49).

2. Pompe à vis excentrique selon la revendication 1, **caractérisée en ce que**, entre les deux sections de palier (46, 49), il existe une fente (50) qui présente une forme annulaire et est délimitée d'un côté par une section intermédiaire (48) de l'extrémité de couplage (40) de l'arbre récepteur (42) et, de l'autre côté, par la section opposée de la paroi (28) de l'extrémité de l'arbre creuse de l'arbre de la pompe (18).

3. Pompe excentrique à vis selon la revendication 1 ou 2, **caractérisée en ce que** le dispositif tendeur (52) est disposé à proximité du bord d'extrémité (29) de la paroi cylindrique (28) .

4. Pompe à vis excentrique selon la revendication 2, **caractérisée en ce que** la longueur axiale (b) de la première section de palier (46) correspond environ à la longueur axiale (n) de la fente (50), de préférence est un peu plus faible.

5. Pompe à vis excentrique selon la revendication 1 ou 4, **caractérisée en ce que** la deuxième section de palier (49) est plus courte que la première section de palier (46), et que le rapport entre leurs longueurs (b₁/b) est de préférence d'environ 1 / 4.

6. Pompe à vis excentrique selon l'une quelconque des revendications 1 à 5, **caractérisée en ce que** le rapport entre l'épaisseur (e) de la paroi (28) de l'extrémité d'arbre creuse et le diamètre de l'arbre (d) d'un arbre de pompe (18) est compris entre 1/7 et 1/15, est de préférence égal à environ 1/10.

7. Pompe à vis excentrique selon l'une quelconque des revendications 1 à 6, **caractérisée en ce que** l'anneau tendeur (53) du dispositif tendeur (52) est agencé en forme de L en coupe transversale avec un côté de pression (54) adjacent à l'arbre de la pompe (18) et présentant de l'autre côté la surface extérieure inclinée et avec un collet radial (55), moyennant quoi des boulons de tension (57), jouant le rôle d'éléments de traction traversent le collet radial (55), lesquels boulons de tension s'engrènent dans l'anneau extérieur (58).

8. Pompe à vis excentrique selon la revendication 1 ou 3, **caractérisée en ce que** l'anneau extérieur (58) peut être transposé en direction de la tête articulée (16) dans sa position tendue.

9. Pompe à vis excentrique selon la revendication 1 ou 7, **caractérisée par** un angle (t) compris entre 5° et 10°, de préférence égal à environ 7°.
